# EUROPEAN PATENT APPLICATION

(11) **EP 4 831 691 A1**
(43) Date of publication of application: **28.10.2026**
(21) Application number: 26174274.6
(22) Date of filing: 23.04.2026
(51) Int. Cl.: G01S 17/95, G01S 7/48, G01S 7/486, G01S 17/10, G01S 17/42, G01S 17/58

(54) **MOTION-COMPENSATED LIDAR MEASUREMENTS FOR GUST LOAD ALLEVIATION**

(30) Priority: 24.04.2025 US 202563793806 P; 17.04.2026 US 202619650986
(71) Applicant: Honeywell International Inc., Charlotte, NC 28202 (US)
(72) Inventor: GAO, Kaizhong, Charlotte, 28202 (US); ARCHMILLER, Matthew, Charlotte, 28202 (US); DOBBINS, Thomas, Charlotte, 28202 (US)
(74) Representative: Haseltine Lake Kempner LLP

(57) **Abstract**

A method for measuring airflow ahead of an aircraft for gust load alleviation comprises: determining reporting frequency and spatial resolution required for aircraft; collecting per-pulse data regarding backscattered light from pulses of light from detection region; extracting range-resolved data from per-pulse data regarding backscattered light; calculating distance traveled by aircraft and/or shift of spatial grid in common spatial reference frame based on location of the aircraft and time difference between emissions of pulses of light; realigning each pulse measurement result to bin in the spatial grid based on distance traveled by aircraft and/or shift of spatial grid; mapping range-resolved data to bins of spatial grid; and applying weighted average to range-resolved data using weights based on measurement uncertainty to determine a combined measurement for each bin in spatial grid, combined measurement based on measured results from backscattered light from pulses of light from detection region.

## Description

### CROSS-REFERENCE TO RELATED APPLICATIONS

This application claims priority to United States Patent Application Serial No. 19/650,986, filed on April 17, 2026 and entitled "MOTION-COMPENSATED LIDAR MEASUREMENTS FOR GUST LOAD ALLEVIATION", which claims the benefit of United States Provisional Patent Application Serial No. 63/793,806, filed on April 24, 2025 and entitled "LIDAR DETECTION METHODS FOR GUST LOAD ALLEVIATION MEASUREMENTS", which are all hereby incorporated herein by reference in their entirety.

### BACKGROUND

The aviation industry is under increasing pressure to improve fuel efficiency and enhance flight safety.

### SUMMARY

A method for measuring airflow ahead of an aircraft for gust load alleviation comprises: determining a reporting frequency and a spatial resolution required for an aircraft; collecting per-pulse data regarding backscattered light from a plurality of pulses of light from a detection region; extracting range-resolved data from the per-pulse data regarding the backscattered light; calculating at least one of a distance traveled by the aircraft or a shift of a spatial grid in a common spatial reference frame based on a location of the aircraft and a time difference between emissions of the plurality of pulses of light; realigning each pulse measurement result to a bin of a plurality of bins in the spatial grid based on the at least one of the distance traveled by the aircraft or the shift of the spatial grid; mapping the range-resolved data to the plurality of bins of the spatial grid; and applying a weighted average to the range-resolved data using weights based on measurement uncertainty to determine a combined measurement for each bin of the plurality of bins in the spatial grid, the combined measurement based on measured results from the backscattered light from the plurality of pulses of light from the detection region.

A system for positioning onboard an aircraft comprises: at least one laser source configured to generate a plurality of pulses of light; at least one line of sight configured to define an optical path to emit the plurality of pulses of light toward a detection region; at least one receiving optics configured to receive backscattered light from the plurality of pulses of light from the detection region; at least one detector configured to receive the backscattered light from the detection region from the at least one receiving optics; and processing circuitry configured to: determine a reporting frequency and a spatial resolution required for the aircraft; collect per-pulse data regarding the backscattered light from the plurality of pulses of light from the detection region; extract range-resolved data from the per-pulse data regarding the backscattered light; calculate at least one of a distance traveled or a shift in a spatial grid in a common spatial reference frame based on a location of the aircraft and a time difference between emissions of the plurality of pulses of light; realign each pulse measurement result to a bin of a plurality of bins in the spatial grid based on the at least one of the distance traveled or the shift in the spatial grid; map the range-resolved data to the plurality of bins of the spatial grid; and apply a weighted average to the range-resolved data using weights based on a measurement uncertainty to determine a combined measurement for each bin of the plurality of bins in the spatial grid, the combined measurement based on measured results from the backscattered light from the plurality of pulses of light from the detection region.

A method comprises: determining a reporting frequency and spatial resolution needed for an aircraft; determining maximum power output from at least one laser source at a given operation condition; selecting a pulse repetition rate for the at least one laser source independently of the reporting frequency; emitting, from the at least one laser source, a plurality of pulses of light at the maximum power output toward a detection region; receiving, by a detector, backscattered light from the plurality of pulses of light from the detection region; collecting an airspeed and an angle of attack of the aircraft in real-time; collecting turning information of the aircraft based on a projected fly direction in real-time; collecting per-pulse data regarding the backscattered light from the plurality of pulses of light at the maximum power output from the detection region at the given operation condition; extracting range-resolved data from the per-pulse data regarding the backscattered light based on a location of the aircraft determined based on at least one of the airspeed, the angle of attack, and the turning information for the aircraft; calculating at least one of a distance traveled or a shift in a spatial grid in a common spatial reference frame based on the location of the aircraft and a time difference between emissions of the plurality of pulses of light; realigning each pulse measurement result to a bin of a plurality of bins in the spatial grid based on the at least one of the distance traveled or the shift in the spatial grid; mapping the range-resolved data to the plurality of bins of the spatial grid; applying a weighted average to the range-resolved data using weights based on measurement uncertainty to determine a combined measurement for each bin of the plurality of bins in the spatial grid, the combined measurement based on measured results from the backscattered light from the plurality of pulses of light from the detection region; and reporting the combined measurement for each bin of the plurality of bins within the spatial grid.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1D each show different ways of performing Gust Load Alleviation (GLA).
Figures 2A-2C show baseline configuration and an enhanced configuration.
Figure 3 is an example method for improving the signal level to close the signal-to-noise ratio (SNR) gap required to make Gust Load Alleviation (GLA) work.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, the aviation industry is under increasing pressure to improve fuel efficiency and enhance flight safety. In examples, one of the key focus areas is Gust Load Alleviation (GLA), which can lead to significant fuel savings (such as up to 8%). In examples, Gust Load Alleviation (GLA) includes sensing the wind direction ahead of an aircraft and responding in real time to smooth the ride. In examples, Gust Load Alleviation (GLA) requires a forward spatial resolution of approximately 10 meters, measurements at a forward distance of approximately 100-300 meters, and near real time updates.

In examples, despite the potential benefits, there is currently no effective solution for conducting such measurements. In examples, fast and accurate optical measurements of properties of a moving media (such as the air ahead of a moving vehicle) are hard to make, but may be necessary in certain applications, such as for a gust load alleviation system. In examples, current technologies such as High Altitude LiDAR Atmospheric Sensing (HALAS) and Stochastic Robustness Analysis and Design (SRAD) may not fulfill this need well. In examples, current analysis techniques can bin and average data only to the extent that one can assume the measurements correspond to the same or overlapping spatial region in a common spatial reference frame. In examples, knowledge of the velocity of the media (perhaps augmented by the optical measurements themselves) can be used to combine spatially resolved measurements over time and reduce uncertainties.

In examples, Light Detection and Ranging (LiDAR)-based technology has emerged as a leading candidate to address this issue due to its ability to provide highresolution spatial data. In examples, the low signal strength collected by current LiDAR systems poses a significant challenge. In examples, the signal level can be enhanced to achieve higher spatial resolution required for accurate Gust Load Alleviation (GLA) detection. In examples, this data is crucial for aircraft during flight, as it can also serve as a backup air data system for navigation. In examples, this technology can be applied to any spatially resolved measurement of a moving media. In examples, by measuring backscattered light returning, the doppler effect can be used to process data and measure a vertical component and incoming component of the wind speed. In examples, the emitted light interacts with molecules in the air at a measurement location and backscattered light from the interaction of the emitted light with the molecules in the air is received by a telescope and/or other receiving optics. In examples, the signal from the backscattered light is significantly smaller when measuring further away distances. In examples, the signal level drops nearly an order of magnitude when moving from 100 meters to 300 meters.

In examples, it is desirable to try to get usable signals back at further distances by accumulating signals from backscattered light from a plurality of emitted pulses. In an example gust load alleviation system, spatially resolved velocity components of the air in front of an aircraft may be combined to get a more precise measurement at closer ranges than would otherwise be possible. In examples, while current technology is unable to meet customer requirements, the proposed technology is able to improve both precision and spatial resolution. In examples, a high performing gust load alleviation system can significantly reduce fuel consumption.

In examples, the emitted light is emitted in pulses and a portion of the light is backscattered back. In examples, each individual LiDAR pulse has substantial energy coming out and less signal coming back in the return signals as backscattered light. In examples, the backscattered return is processed using range-resolved time bins. In examples, a desired spatial resolution (such as approximately 10 meters) corresponds to a receive timing interval selected based on round-trip propagation time for the pulses of light. In examples, the timing interval used to form the range-resolved bins is distinct from a pulse repetition rate of the laser source and is also distinct from a reporting frequency at which measurement results are provided to an aircraft system. In examples, each individual returning signal is interpreted to calculate the wind velocity in the vertical and horizontal directions.

In examples, the return signal is relatively small. In examples, the signal-to-noise ratio (SNR) gap is needed for Gust Load Alleviation (GLA) to function properly. In examples, a solution is provided to collect the maximum amount of signal for each location studied and then achieve the maximum amount or higher signal. In examples, the expected resolution improvement at the target range is between 2 and 3 times. In examples, this invention offers a solution that existing technology cannot fulfill. In examples, it helps the customer reduce fuel costs and potentially serves as a backup air data system. In examples, the resolution improvements are expected to be 2-3 times better. In examples, to improve signal level and close the signal-to-noise ratio (SNR) gap required to make Gust Load Alleviation (GLA) work.

In examples, the velocity of the aircraft is known and as the aircraft is moving forward the LiDAR is continuously sending pulses with the laser. In examples, they collect all the signals back from each pulse. In examples, as the next pulse is sent out, the aircraft will have traveled a small distance. In examples, the sampled measurement region shifts relative to aircraft coordinates between pulses based on aircraft motion and pulse timing, and optionally based on estimated motion of the air mass. In examples, a return signal data point from a first pulse and a return signal data point from a later pulse can therefore correspond to the same or an overlapping spatial region in a common spatial reference frame, and the corresponding measurement results can be combined to obtain a higher-confidence measurement. In examples, the return signal is backscattered at the resolution (such as 10 meter resolution) and signal is collected back for each pulse. In examples, the noise power also increases (such as by doubling) by adding them together. In examples, the noise amplitude is not increased as much as the noise power. In examples, if a number of the return signals from different pulses that overlap in time are added together, a net signal to noise ratio improvement occurs, which results in a net resolution improvement. In examples, the known speed of the aircraft is used to make dynamic adjustment of the timing window based on change in speed of the aircraft such that, for each pulse of a plurality of pulses, one data point accurately represents the same or an overlapping region in the common spatial reference frame (such as the same 10 meter region at a 10 meter resolution). In examples, this allows backscattered light from multiple pulses to contribute to a stronger return signal of backscattered light.

In examples, a pulsed laser is used along with photo multiplier tubes (PMTs) to spatially resolve backscattered light from each single pulse. In examples, the PMTs trigger delay that can be dynamically adjusted in real time depending on air velocity. In examples, measurements are made with a spatial resolution that can resolve required features (such as a wind gust) and a repetition rate such that more than one measurement of the same or overlapping spatial region in a common spatial reference frame are made as the media moves. In examples, measurements are either cached in memory and smartly re-binned for a weighted combination with other measurements or previous measurements are added to a model in a Bayesian/Kalman filter strategy. In examples, data manipulation can be performed to gain information (such as through a trend and predictive analytics tool). In examples, the functionality can be performed in a computer system, device, or unit using firmware. In examples, optical air data may be stored on the aircraft in a memory or storage devices or servers onboard the aircraft.

In examples, the spatial grid may be defined in aircraft coordinates, Earthreferenced coordinates, or predicted flight-path coordinates, and per-pulse measurement results may be transformed into the selected common spatial reference frame before fusion. In examples, when a previous pulse range bin only partially overlaps a current grid cell, the contribution from that previous pulse may be weighted according to fractional overlap and optionally according to measurement uncertainty.

In examples, the weighted contribution of a pulse measurement result to a bin positioned within the spatial grid may be based on a combination of factors including a fractional spatial overlap between a range-resolved bin and the bin positioned within the spatial grid, a measurement uncertainty associated with the pulse measurement results, a signal-to-noise metric associated with the pulse measurement result, and/or a time difference between collection of the pulse measurement results and a reporting time for the combined measurement. In examples, pulse measurement results having a greater fractional overlap, lower uncertainty, higher signal-to-noise ratio, and/or smaller time difference may be weighted more heavily than other pulse measurement results.

In examples, the processing circuitry may selectively include or exclude pulse measurement results from the combined measurement based on one or more qualification criteria. In examples, a pulse measurement result may be excluded, down-weighted, or limited in contribution when the corresponding range-resolved bin has less than a threshold overlap with a selected spatial-grid bin position, when the corresponding measurement uncertainty exceeds a threshold, when the pulse measurement result is older than a threshold age, and/or when predicted motion of the air mass indicates that the pulse measurement result is less representative of the selected spatial-grid bin position. In examples, the weighted combination may thereby preferentially preserve spatial fidelity while still increasing signal level relative to a single-pulse measurement.

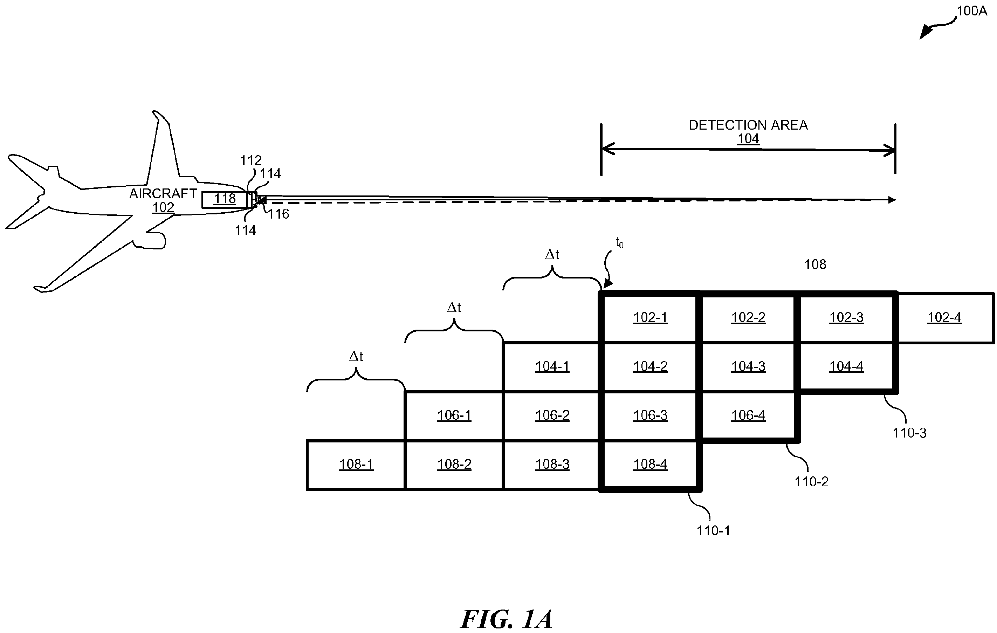

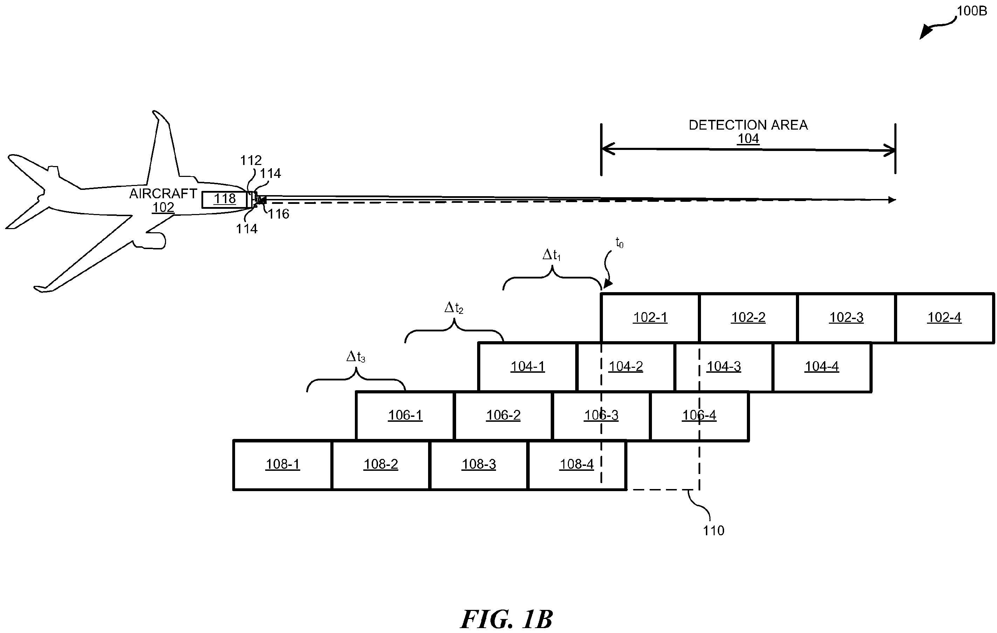

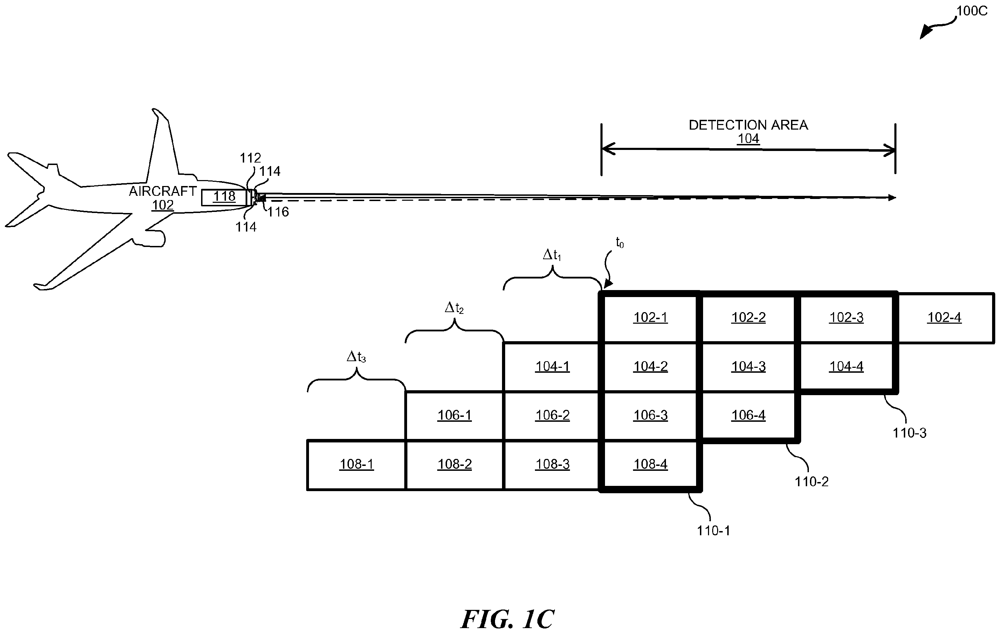

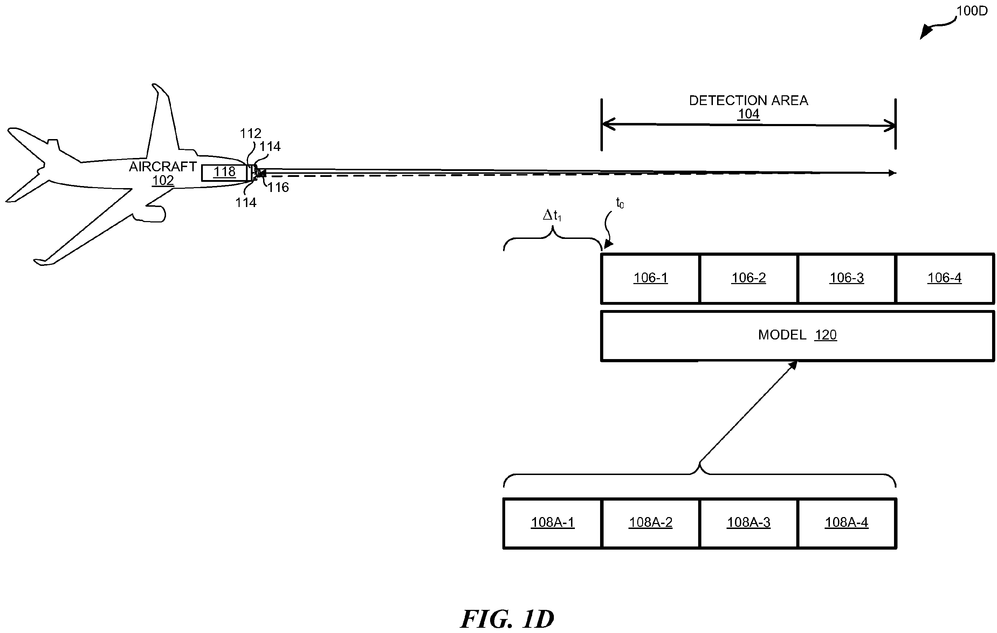

Figures 1A-1D each show different ways of performing Gust Load Alleviation (GLA). Figure 1A shows an example diagram 100A of using a dynamic trigger and weighted averaging. Figure 1B shows an example diagram 100B of using smart re-binning (mathematically re-aligning bins) and weighted averaging. Figure 1C shows an example diagram 100C using re-aligning of the detection time windows and weighted averaging. Figure 1D shows an example diagram 100D using a Bayesian/Kalman filter strategy.

Figure 1A shows an example diagram 100A of using dynamic trigger and weighted averaging. In diagram 100A of Figure 1A, the aircraft 102 (or other vehicle) on the left side is traveling toward the right side and bins 106 (such as bin 106-1, bin 106-2, bin 106-3, bin 106-4, etc.) represent return bins of backscattered light from a most recent emitted pulse while bins 108A (such as bin 108A-1, bin 108A-2, bin 108A-3, bin 108A-4, etc.) represent return bins of backscattered light from a first previous emitted pulse; bins 108B (such as bin 108B-1, bin 108B-2, bin 108B-3, bin 108B-4, etc.) represent return bins of backscattered light from a second previous emitted pulse; and bins 108C (such as bin 108C-1, bin 108C-2, bin 108C-3, bin 108C-4, etc.) represent return bins of backscattered light from a third previous emitted pulse. In examples, groups of bins 110 (such as group of bins 110-1, group of bins 110-2, group of bins 110-3) can be used to calculate weighted averages.

In examples, at least one laser source 112 emits light into a detection area 104 using laser emitting optic(s) 114. In examples, receiving optic(s) 116 are configured to receive scattered light scattered back based on the light emitted into the detection area 104. In examples, the laser emitting optic(s) 114 for the LiDAR include two different line of sights and the scattered light is collected at the receiving optic(s) 116 for the LiDAR. In examples, the laser emitting optic(s) 114 for the LiDAR are emitted to only one line of sight or any number of line of sights greater than two. In examples, the scattered light is collected in a short period of time and the data is processed. In examples, in order to do the measurement, the receiving optic(s) 116 are aimed in the same direction as the line of sights for the laser(s) for the LiDAR. In examples, there are multiple receiving optic(s) 116 for receiving multiple line of sights or lasers. In examples, the receiving optic(s) 116 include telescope(s), lens(es), and/or other receiving optic(s). In examples, the line of sights need to be pointing forward in order to make measurements of space in front of the aircraft.

In examples, the light gets scattered by molecules in the detection area 104 and is detected by the telescope(s) of the receiving optic(s) 116. In examples, the scattered signal within the detection area 104 can be sensed by the LiDAR sensor. In examples, if the emitted light from the laser emitting optic(s) 114 crosses over the telescope(s) of the receiving optic(s) 116 view angle, the telescope would not be able to see the scattered light, even though these regions have scattered light. In examples, system 100 includes processing circuitry 118 (such as a data processor or other circuitry) configured to process data according to any of the methods described herein (such as method 200, method 400, etc.). In examples, the processing circuitry 118 can also be referred to generally as "circuitry," a "circuit," or "circuits" that is or are configured to implement at least some of the associated functionality. In examples, at least some of the functionality may be implemented in software or firmware executing on one or more suitable programmable processors (or other programmable device) or configuring a programmable device (for example, processors or devices included in or used to implement special-purpose hardware, general-purpose hardware, and/or a virtual platform). In examples, the software can comprise program instructions that are stored (or otherwise embodied) on or in an appropriate non-transitory storage medium or media (such as flash or other non-volatile memory, magnetic disc drives, and/or optical disc drives) from which at least a portion of the program instructions are read by the programmable processor or device for execution thereby (and/or for otherwise configuring such processor or device) in order for the processor or device to perform one or more functions described here as being implemented the software. In examples, such hardware or software (or portions thereof) can be implemented in other ways (for example, in a field programmable gate array (FPGA), application specific integrated circuit (ASIC), etc.).

In examples, the measurements are cached in memory. In examples, the processing circuitry 118 are configured to implement the following methodology. In examples, the air velocity is used to dynamically adjust the sensor trigger delay so that spatial bins correspond to the same or overlapping spatial region in a common spatial reference frame. In examples, a weighted average of a group of bins 110-1 is calculated using measurement uncertainty. In examples, Δ*t* is the time between two different laser pulses. In examples, when the Δ*t* is known, the amount of shift is known. In examples, the bins 106, 108A, 108B, and/or 108C are already aligned in time and they can be added together directly to realize the improvement of signal-to-noise ratio (SNR)). In examples, for each pulse that is sent out, data coming back may be collected as a backscattered signal that depends on how far away the return is coming from. In examples, multiple data points are collected for each pulse that is sent out. In examples, the first pulse is closest to the aircraft and then the aircraft sees the second closest point, the third closest point, etc. until the aircraft sees the total length (such as 300 meters away). The width of the bins 106, 108A, 108B, and/or 108C is based on a round-trip propagation interval corresponding to the range-resolved timing interval Δ*t*. In examples, the width of the bins 106, 108A, 108B, and/or 108C is 10 meters (in space), but it could be configured to be other widths as well depending on desired attributes of system. In examples, there are two different timescales, a first timescale that the laser is emitted on (which is very fast) and a second timescale for the detection, integration, and read out of the backscattered light to result in a range resolved measurement (such as in the range bins 106, 108A, 108B, and/or 108C). In examples, the system is always measuring a certain distance ahead (such as 100-300 meters) and can take a previous measurement and add the results from previous measurements to get improved signal to noise.

In examples, the line at t₀ is the current measurement of where a laser pulse most recently was emitted. In examples, the line at t₀ - Δ*t* is the first previous measurement of where a laser pulse most recently was emitted. In examples, the line at t₀ - 2Δ*t* is the second previous measurement of where a laser pulse most recently was emitted. In examples, the line at t₀ - 3Δ*t* is the third previous measurement of where a laser pulse most recently was emitted. In example, the centers within the range bins 106, 108A, 108B, 108C, etc. represent where the average location of the range bins is. In examples, the next laser pulse happens Δ*t* later (which is a different timescale) and the previous laser pulse happened Δ*t* prior. In examples, the air is moving relative to the aircraft 102 and they can time the laser pulse to go out at a Δ*t* later such that the air has moved, but it samples the same or overlapping spatial region in a common spatial reference frame. In examples with 5 meter resolution, Δ*t* corresponds to a round-trip light-travel interval for approximately 5 meter spatial resolution. In examples with 10 meter resolution, Δ*t* corresponds to a round-trip light-travel interval for approximately 10 meter spatial resolution.

In examples, the system can take a previous measurement and add results from the previous measurement to the current measurement to get an improved signal to noise ratio. In examples, the system remeasures the same or an overlapping spatial region in the common spatial reference frame, but it now takes the second range bin 108A-2 of the previous measurement and add it to the first range bin 106-1 of the current measurement. In examples, by knowing the airspeed relative to the aircraft 102, the laser pulses can be adjusted when they are sent. In examples, the bins 106 (including bin 106-1, bin 106-2, bin 106-3, bin 106-4, etc.) include the measurements for the current laser pulse. In examples, the bins 108A (including bin 108A-1, bin 108A-2, bin 108A-3, bin 108A-4) include the measurements for the first previous laser pulse (the pulse one prior to the current pulse). In examples, the bins 108B (including bin 108B-1, bin 108B-2, bin 108B-3, and/or bin 108B-4) include the measurements for the second previous laser pulse (the pulse two prior to the current pulse), and the blue row is the measurements for the laser pulse three prior. In examples, when the previous laser pulse went out, it was in the same physical location as the current laser pulse was, but now the air has moved toward the aircraft 102. In examples, the previous range bins (such as bin 108A-2, bin 108B-3, and/or bin 108C-4) of the previous laser pulses can be added to the current range bin 106-1 of the current laser pulse until there is no more data. In examples, all the data can be collected and a calculation can be made of a weighted average of a group of bins 110-1 to combine range bins from previous pulses to improve the measurements. In examples, the Δ*t* is dynamically related to the air speed, such that the same or overlapping spatial region in a common spatial reference frame is resampled.

In examples, *Y₀* is the reported measurement, which is a weighted average used to calculate the value for the first black bolded box by averaging the four smaller bins together to make our best measurement for the first range bin. In examples, *w₀ⱼ* is the weight which is inversely proportional to the uncertainty (which is generally related to the signal strength). Here are equations: ${Y}_{0} = \frac{\sum {w}_{0 j} {y}_{0 j}}{\sum {w}_{0 j}}$
${w}_{0 j} = \frac{1}{{{σ}_{0 j}}^{2}}$

Figure 1B shows an example diagram 100B using smart re-binning (mathematically re-aligning bins) and weighted averaging. In diagram 100B of Figure 1B, the aircraft 102 (or other vehicle) on the left side is traveling toward the right side and bins 106 (such as bin 106-1, bin 106-2, bin 106-3, bin 106-4, etc.) represent return bins of backscattered light from a most recent emitted pulse while bins 108A (such as bin 108A-1, bin 108A-2, bin 108A-3, bin 108A-4, etc.) represent return bins of backscattered light from a first previous emitted pulse; bins 108B (such as bin 108B-1, bin 108B-2, bin 108B-3, bin 108B-4, etc.) represent return bins of backscattered light from a second previous emitted pulse; and bins 108C (such as bin 108C-1, bin 108C-2, bin 108C-3, bin 108C-4, etc.) represent return bins of backscattered light from a third previous emitted pulse.

In examples, the measurements are cached in memory. In examples, the processing circuitry 118 are configured to implement the following methodology. In examples, the air velocity is used to smartly re-bin data using fractional weights. In examples, additional weighting comes from measurement uncertainty. In examples, the system can keep the laser firing at a certain frequency. In examples, bins can also be combined without having to trigger the laser specifically. In examples, knowledge of the airspeed is used to determine which range bins from a previous measurement correspond to a certain range bin in the current measurement to do this averaging. In example, the system may take a portion of the previous bins (such as bin 108A-2, bin 108A-3, bin 108B-3, bin 108B-4, bin 108C-4, etc.) and portion of the current bin (such as bin 106-1) because the bins don't fully overlap. In examples, bin 108A-2, bin 108A-3, bin 108B-3, bin 108B-4, bin 108C-4, etc. are all previous bins that have information that corresponds to current bin 106-1. In examples, weighted averages are applied to the portion of the current bin 106-1) and the portion of the previous bins (such as bin 108A-2, bin 108A-3, bin 108B-3, bin 108B-4, bin 108C-4, etc.). In examples, the current bin 106-1 and more recent previous bins (such as bin 108A-2 and bin 108A-3) are weighted more heavily than less recent previous bins (such as bin 108C-4, bin 108B-3, and bin 108B-4). In examples, the signal strength is lower for the less recent previous bins (such as bin 108C-4, bin 108B-3, and bin 108B-4) than for the current bin 106-1 and more recent previous bins (such as bin 108A-2 and bin 108A-3). In examples, the weighting and signal strength of the backscattered light results in the backscattered light in the majority of the signal coming from the current bin 106-1 (which has a higher certainty) and less signal coming from more previous bins (which has more uncertainty).

In examples, the laser pulses are not related to the aircraft 102 speed, but are being emitted at a constant frequency. In examples, Δ*t₁,* Δ*t₂*, Δ*t₃*, etc. represents the reporting rate(s) or delivery rate(s), which represent the rate at which results are provided. In examples, Δ*t₁*, Δ*t₂*, Δ*t₃,* etc. represents the time between laser pulses. In examples, the reporting rate is fixed, meaning Δ*t₁,* Δ*t₂,* Δ*t₃,* etc. are the same. In examples, a result can be reported every tenth of a second (or some similar rate) and then all the returns that correspond to the first range bin that fall within that tenth of a second would be summed together. In examples, the summing is used with a weighted average. In examples measurements that are further away are weighted lower because their uncertainty is higher. In examples, the data is re-binned based on the aircraft 102 speed. In examples, this is how the boundaries are selected for the bin. In examples, the uncertainty the weights may be selected as one over the uncertainty squared. In examples, the uncertainty is calculated based on analysis of the signal strength and signal to noise of the refracted light.

In examples, Y is a weighted average used to calculate the weight times the measurements across a number of measurements and then this is divided by the total weight. In examples, the system takes some fractional components of the bins to do this smart re-binning based upon the speed of the aircraft 102. In examples, *w₀* is the weight which is inversely proportional to the uncertainty (which is generally related to the signal strength). In examples, *Y₀* is a first reported measurement, *Y₁* is a second reported measurement, etc. Here are equations for *Y₀* and equations for *Y₁, Y_{2,} Y_{3,}* etc. would be similar:
${Y}_{0} = \frac{{w}_{0} {y}_{0} + {\sum }_{j = 1}^{M} {\sum }_{i = 1}^{N} {f}_{ij} {w}_{ij} {y}_{ij}}{{w}_{0} + {\sum }_{j = 1}^{M} {\sum }_{i = 1}^{N} {f}_{ij} {w}_{ij}}$

Figure 1C shows an example diagram 100C using re-aligning of the detection time windows and weighted averaging. In diagram 100C of Figure 1C, the aircraft 102 (or other vehicle) on the left side is traveling toward the right side and bins 106 (such as bin 106-1, bin 106-2, bin 106-3, bin 106-4, etc.) represent return bins of backscattered light from a most recent emitted pulse while bins 108A (such as bin 108A-1, bin 108A-2, bin 108A-3, bin 108A-4, etc.) represent return bins of backscattered light from a first previous emitted pulse; bins 108B (such as bin 108B-1, bin 108B-2, bin 108B-3, bin 108B-4, etc.) represent return bins of backscattered light from a second previous emitted pulse; and bins 108C (such as bin 108C-1, bin 108C-2, bin 108C-3, bin 108C-4, etc.) represent return bins of backscattered light from a third previous emitted pulse. In examples, groups of bins 110 (such as group of bins 110-1, group of bins 110-2, group of bins 110-3) can be used to calculate weighted averages.

In examples, the measurements are cached in memory. In examples, the processing circuitry 118 are configured to implement the following methodology. In examples, the speed of the aircraft 102 changes over time and there may not be another measurement aligned at the right bin when the alignment for a given measurement pulse frequency is performed. In examples, the bins 106, 108A, 108B, and/or 108C are not aligned in time and they are aligned before they can be summed to realize the improvement of signal-to-noise ratio (SNR). In examples, collected aircraft speed information can be used to adjust the detection window time jitter (Δ*t*) accordingly to cause the current bin (such as bin 106-1) to align with the previous bins (such as bin 108A-2, bin 108B-3, and bin 108C-4, etc.) even when the aircraft speed changes. In examples, Δ*t* may not be constant between the various bins. In examples, Δ*t₁* between the current bin 106-1 and previous bin 108A-2 is different than Δ*t*₂ between the previous bin 108A-2 and the previous bin 108B-3 and also different than Δ*t₃* between the previous bin 108B-3 and previous bin 108C-4.

In examples, the line at t₀ is the current measurement of where a laser pulse most recently was emitted. In examples, the line at t₀ - Δ*t₁* is the first previous measurement of where a laser pulse most recently was emitted. In examples, the line at t₀ - (Δ*t₁ +* Δ*t₂*) is the second previous measurement of where a laser pulse most recently was emitted. In examples, the line at t₀ - (Δ*t₁ +* Δ*t₂ +* Δ*t₃*) is the third previous measurement of where a laser pulse most recently was emitted. In examples, Δ*t₁,* Δ*t₂,* and Δ*t₃* are used to compensate the spatial change due to different speeds of the aircraft 102. In example, the centers within the range bins 106, 108A, 108B, 108C, etc. represent where the average location of the range bins is. In examples, the system can take a previous measurement and add results from the previous measurement to the current measurement to get an improved signal to noise ratio.

In examples, the system remeasures the same or an overlapping spatial region in the common spatial reference frame, but it now takes the second range bin 108A-2 of the previous measurement (at time t₀ - Δ*t₁*) and add it to the first range bin 106-1 of the current measurement. In examples, the bins 106 (including bin 106-1, bin 106-2, bin 106-3, bin 106-4, etc.) include the measurements for the current laser pulse. In examples, the bins 108A (including bin 108A-1, bin 108A-2, bin 108A-3, bin 108A-4) include the measurements for the first previous laser pulse (the pulse one prior to the current pulse). In examples, the bins 108B (including bin 108B-1, bin 108B-2, bin 108B-3, and/or bin 108B-4) include the measurements for the second previous laser pulse (the pulse two prior to the current pulse), and the blue row is the measurements for the laser pulse three prior. In examples, when the previous laser pulse went out, it was in the same physical location as the current laser pulse was, but now the air has moved toward the aircraft 102. In examples, the previous range bins (such as bin 108A-2, bin 108B-3, and/or bin 108C-4) of the previous laser pulses can be added to the current range bin 106-1 of the current laser pulse until there is no more data. In examples, all the data is collected and a calculation can be made of a weighted average of a group of bins 110-1 to combine range bins from previous pulses to improve the measurements.

Figure 1D shows an example diagram 100D using a Bayesian/Kalman filter strategy. In diagram 100D of Figure 1D, the aircraft 102 (or other vehicle) on the left side is traveling toward the right side and bins 106 (such as bin 106-1, bin 106-2, bin 106-3, bin 106-4, etc.) represent return bins of backscattered light from a most recent emitted pulse while bins 108A (such as bin 108A-1, bin 108A-2, bin 108A-3, bin 108A-4, etc.) represent return bins of backscattered light from a first previous emitted pulse.

In examples, the measurements are cached in memory. In examples, the processing circuitry 118 are configured to implement the following methodology. In examples, the measurements go into a model 120 (such as a Bayesian and/or Kalman filter) to add prior knowledge to the current measurement. In examples, every measurement that is made using the Bayesian and/or Kalman filter goes into information the whole results, until the measurements are no longer relevant to the current results. In examples the model 120 accounts for air velocity. In examples, data gets added to a forward looking model 120 that understands that it has made a previous measurement and it predicts what the value of the current measurement is going to be for the current measurement and the prior information is added to the measurement to predict an estimate for a future measurement and hence a reduced uncertainty in that measurement.

In examples, if the model 120 predicts a specific airspeed and the subsequent measurement of airspeed is slightly different, the system can update the airspeed in the model 120 and be informed and adjusted based on the actual measurement to make better predictions.

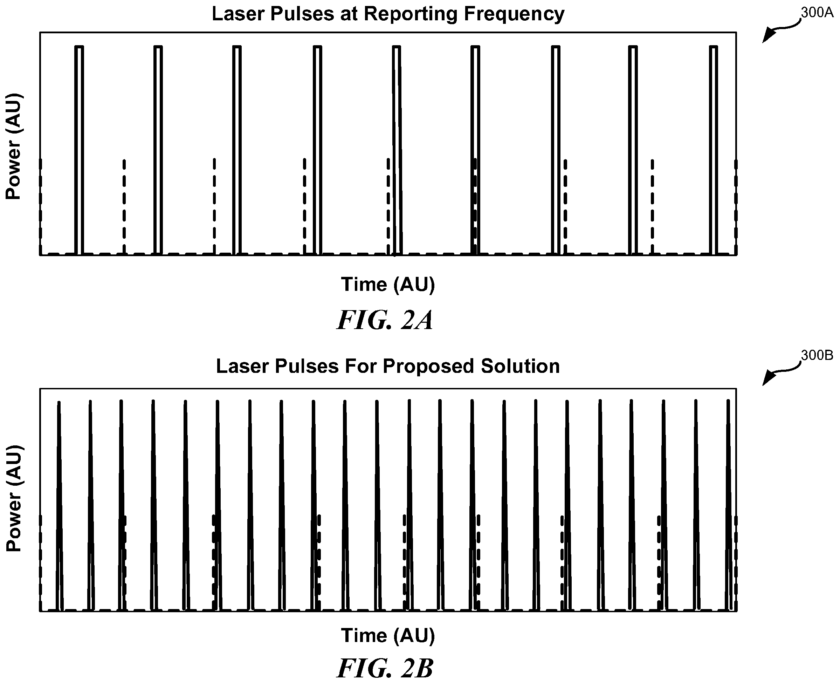

Figures 2A-2C show a baseline configuration and an enhanced configuration with asynchronous detection (where the measurement is not synchronized with the actual reported measurement of frequency, such as to an aircraft 102). In examples, rather than fix the laser pulse at a frequency at which the aircraft 102 is expecting the data to be reported out, regardless of the frequency needed for reporting to the aircraft 102, the system is configured to max out the laser power output at whatever frequency works best. In examples, there is potential for maximum power output when the repetition rate of the laser is multiplied by the pulses energy such that the total accumulated amplitude of the laser pulses will get to maximum, and there is a potential to collect the maximum amount of the signal. In examples during operation, the laser is pumped and emitted to two different line of sights in two slightly different directions in front of the aircraft 102 and the backscattered light is collected. In examples, for each pulse, data is collected at each of these different locations of the information. In examples, the bins (such as 10 meter bins) would be misaligned. In examples, for each bin (such as 10 meter bins), they can do their own processing and give the measured result. In examples, after these are all taken together, interpolation or re-binning described herein after the measurements are taken. In examples, the system reconstructs the airflow profile versus distance in front of the aircraft 102 at any given time. In examples, the time difference between each pulse and the return is recorded and then based on the speed of the aircraft 102, the distance moved between pulses is calculated with dynamic shifting, the bins anchor the location. In examples, for each pulse, it can be determined how much the backscattered light coming back shifts in space. In examples, based on this information, the gust load profile is reconstructed. In examples, the resolution will eventually still be proportional to the square root of the total photons collected as a part of the signal (because the power is the total number of photons). In examples, the resolution will eventually have a net gain.

In examples, the laser source may be operated at a pulse repetition rate higher than and independent of the reporting frequency so as to maximize average optical power within operating constraints, and the resulting per-pulse data may be re-registered to the output spatial grid before delivery to the aircraft system.

In examples, the pulse repetition rate, the range-resolved receive timing interval, and the reporting frequency may be selected independently from one another. In examples, the pulse repetition rate may be selected to increase average optical power and photon collection within operating constraints, the range-resolved receive timing interval may be selected to achieve a desired spatial resolution along the line of sight, and the reporting frequency may be selected to satisfy an update-rate requirement of an aircraft system. Accordingly, a plurality of pulse measurement results may be acquired between successive reporting times and re-registered to the spatial grid before generation of a reported measurement set.

In examples, because the pulse repetition rate is not constrained to match the reporting frequency, the number of pulses contributing to a combined measurement for a given spatial-grid bin position may vary from one reporting interval to another and from one spatial-grid bin position to another. In examples, the processing circuitry may reconstruct a reported airflow profile from asynchronously acquired pulse measurement results by mapping the pulse measurement results to the common spatial reference frame and combining available contributions according to overlap and uncertainty. In examples, this architecture allows the system to deliver measurement results at a reporting cadence expected by the aircraft while acquiring and using a denser set of optical measurements than would be available from a onepulse-per-reporting-interval arrangement.

Figure 2A is an example showing an operation mode for a baseline configuration, where data collection is based on one pulse per bin. In examples, Figure 2A shows pulse mode operation. In examples, one big pulse is excited for each in a reported frequency. In examples, if the data output is reported at 20 Hz, then it is desirable to tune the laser pulse to operate at a repetition rate of 20 Hz. In examples, if the data output is reported at 25 Hz, then it is desirable to tune the laser pulse to operate at a repetition rate of 25 Hz. In examples, it is desirable to have one larger pulse within each bin that is attempted to be collected. In examples, the multiple pulse information can be collected across different bins and then re-aligned by shifting each pulse by the same bin lengths to accumulate the data.

Figure 2B is an example showing an operation mode for the proposed solution's enhanced configuration, where the laser sends a signal out with the maximum power measured by total power, such as by increasing: (1) both per pulse energy and the pulsed duration; or (2) the product of the per pulse energy and the pulsed duration. In examples, it is not important whether there is zero, one, or multiple pulses within each bin and/or different numbers of pulses within different bins. In examples, the laser output is continuously maxed out, all the returns are collected, and during the pulse processing, the alignment occurs (or interpolation is done in-between) and the entire profile is reconstructed instead of finding an individual locations number.

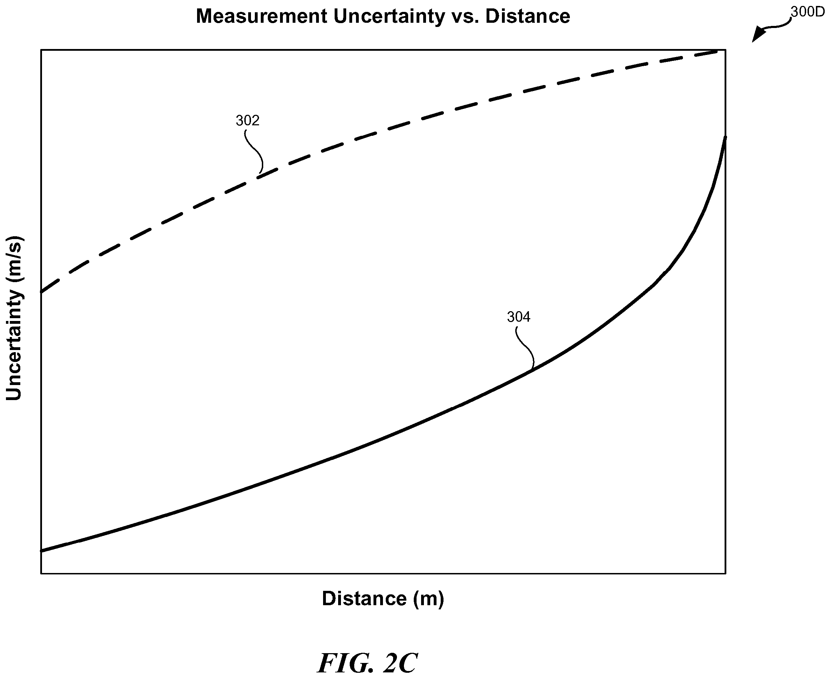

Figure 2C shows the measurement of wind speed uncertainty in meters per second using the baseline configuration (shown on the graph using blue circles) compared to the proposed solution's enhanced configuration (shown on the graph using red Xes). In examples, the results indicate that if the uncertainty level for a single pulse at 300 meters away from the aircraft is 20 meters per second, the proposed solution will lead to more than five times improvement in measurement accuracy between 100 and 150 meters away from the aircraft. In examples, this performance gain can be further realized if the velocity of the aircraft is reduced. In examples, Figure 2C assumes the velocity of the aircraft is at 250 meters per second. In examples, approximately 8-10 times more photons are received per reporting bin's datapoint so that the square root of that is taken to get approximately 2.8-3 times more. In examples, all the pulses can be aligned as shown in Figure 2A, but there is still one pulse per datapoint that is to be reported. In examples, the laser power is higher than that, but the per pulse energy cannot be increased. In examples, this limitation is removed and the laser output is maxed out, such as by increasing the repetition rate of the laser even to a higher rate than the rate expected by the aircraft. In examples, this can be maxed out to have the highest power by maxing out the product of the pulse energy multiplied by the number of pulses per second. In examples, Figure 2B shows more frequent pulses per second than Figure 2A. In examples, the 8-10 times more photons is multiplied by another 3.5 because of the increased rate and that results in approximately 30 times more photons used in operation. In examples, the square root of 30 is approximately 5-5.34 times the gain.

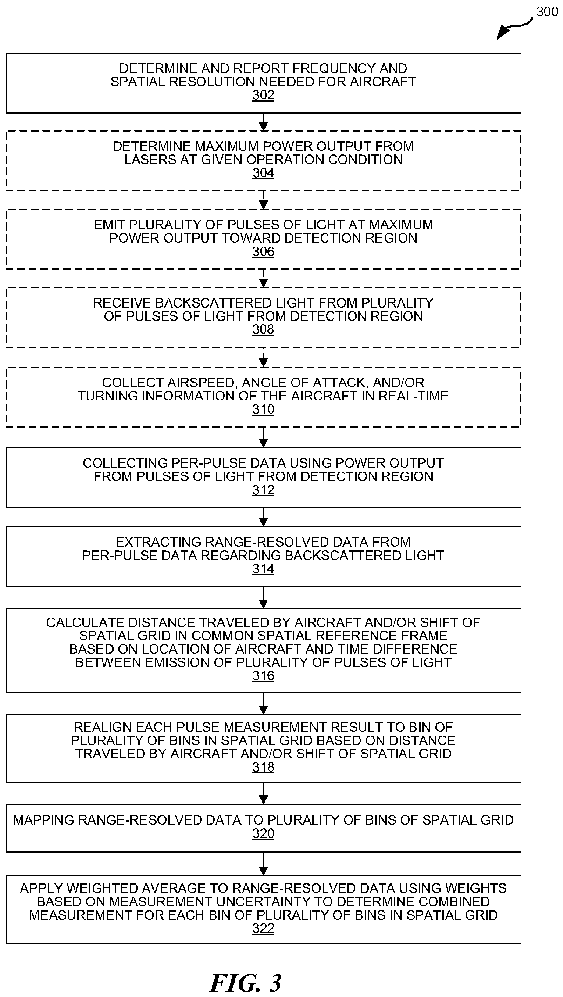

Figure 3 is an example method 300 for improving the signal level to close the signal-to-noise ratio (SNR) gap required to make Gust Load Alleviation (GLA) work. In examples, method 300 begins at block 302 with determining the reporting frequency and spatial resolution needed for the aircraft. In examples, method 300 proceeds to optional block 304 with determining the maximum power output from the lasers at a given operation condition (such as altitude). In examples, the laser frequency/per pulse energy/output power settings are set to be at or near the maximum laser power within the allowable range. In examples, method 300 proceeds to optional block 306 with emitting, from at least one laser source, a plurality of pulses of light towards a detection region. In examples, the pulses of light are emitted at the maximum power output. In examples, method 300 proceeds to optional block 308 with receiving, by a detector, backscattered light from the plurality of pulses of light from the detection region.

In examples, method 300 proceeds to optional block 310 with receiving airspeed, Angle of Attack (AOA), and/or turning information in real-time. In examples, optional block 310 comprises collecting airspeed and Angle of Attack (AOA) in real-time. In examples, optional block 310 comprises receiving the airspeed and Angle of Attack (AOA) in real-time in other ways, such as by reading the airspeed and Angle of Attack (AOA) through an Aeronautical Radio, Incorporated (ARINC) data port. In examples, optional block 310 comprises collecting turning information based on the projected fly direction in real-time. In examples, most measurements are done when an aircraft is not turning, so the turning information is only used while the aircraft is turning and the method 300 can function most of the time without the turning information. In examples, method 300 proceeds to block 312 with collecting per-pulse data regarding backscattered light from plurality of pulses of light from detection region. In examples, the power output from the lasers at the given operation condition determined at optional block 304 may be a maximum power or a percentage of the maximum power, such as 95% of the maximum power, 90% of the maximum power, etc. when considering other factors, such as lifetime, reliability, etc.

In examples, method 300 proceeds to block 314 with extracting range-resolved data from the per-pulse data regarding the backscattered light. In examples, extracting the range-resolved data is based on the measurement at optional block 310. In examples, extracting the range-resolved data is based on location of the aircraft determined based on airspeed and angle of attack and turning information. In examples, method 300 proceeds to block 316 with calculating a distance traveled by the aircraft and/or a shift of a spatial grid in a common spatial reference frame based on a location of the aircraft and a time difference between emissions of the plurality of pulses of light. In examples, the location of the aircraft is determined using data at optional block 310 and the time difference in the emissions of the plurality of pulses of light.

In examples, method 300 proceeds to block 318 with realigning each pulse measurement result to a bin of a plurality of bins in the spatial grid based on the distance traveled by the aircraft and/or the shift of the spatial grid. In examples, the laser pulse frequency can be controlled to match the reporting frequency determined at block 302. In examples, realigning each pulse measurement result to a bin of a plurality of bins in the spatial grid occurs by adjusting the time difference between the emissions of the plurality of pulses of light based on the distance traveled by the aircraft between pulses. In examples, realigning each pulse measurement result to a bin of a plurality of bins in the spatial grid occurs by fractional re-binning when bins from the plurality of pulses partially overlap. In examples, realigning each pulse measurement result to a bin of a plurality of bins in the spatial grid occurs by adjusting at least one detection time window for a bin position in the spatial grid to compensate for the shift in the spatial grid. In examples, realigning each pulse measurement result to a bin of a plurality of bins in the spatial grid occurs through at least one of a Kalman filter or a Bayesian filter. In examples, method 300 proceeds to block 320 with mapping range-resolved data to the plurality of bins of the spatial grid. In examples, method 300 proceeds to block 322 with applying a weighted average to the range-resolved data using weights based on measurement uncertainty to determine a combined measurement for each bin of the plurality of bins in the spatial grid. In examples, the combined measurement is based on measured results from the backscattered light from the plurality of pulses of light from the detection region.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a method for measuring airflow ahead of an aircraft for gust load alleviation, the method comprising: determining a reporting frequency and a spatial resolution required for an aircraft; collecting per-pulse data regarding backscattered light from a plurality of pulses of light from a detection region; extracting range-resolved data from the per-pulse data regarding the backscattered light; calculating at least one of a distance traveled by the aircraft or a shift of a spatial grid in a common spatial reference frame based on a location of the aircraft and a time difference between emissions of the plurality of pulses of light; realigning each pulse measurement result to a bin of a plurality of bins in the spatial grid based on the at least one of the distance traveled by the aircraft or the shift of the spatial grid; mapping the range-resolved data to the plurality of bins of the spatial grid; and applying a weighted average to the range-resolved data using weights based on measurement uncertainty to determine a combined measurement for each bin of the plurality of bins in the spatial grid, the combined measurement based on measured results from the backscattered light from the plurality of pulses of light from the detection region.

Example 2 includes the method of Example 1, further comprising: emitting, from at least one laser source, the plurality of pulses of light toward the detection region; and receiving, by a detector, the backscattered light from the plurality of pulses of light from the detection region.

Example 3 includes the method of Example 2, further comprising: realigning each pulse measurement result by adjusting the time difference between the emissions of the plurality of pulses of light based on the distance traveled by the aircraft between pulses.

Example 4 includes the method of any of Examples 1-3, further comprising: realigning each pulse measurement result by fractional re-binning when bins from the plurality of pulses partially overlap.

Example 5 includes the method of any of Examples 1-4, further comprising: realigning each pulse measurement result by adjusting at least one detection time window for a bin in the spatial grid to compensate for the shift in the spatial grid.

Example 6 includes the method of any of Examples 1-5, further comprising: realigning each pulse measurement result through at least one of a Kalman filter or a Bayesian filter.

Example 7 includes the method of any of Examples 1-6, further comprising: wherein applying the weighted average to the range-resolved data to determine the combined measurement for each bin in the spatial grid comprises: combining the measured results from different pulses into a single bin on the spatial grid using a summation.

Example 8 includes the method of any of Examples 1-7, further comprising: wherein collecting the per-pulse data regarding the backscattered light from the plurality of pulses of light from the detection region is for a given altitude.

Example 9 includes the method of any of Examples 1-8, further comprising: collecting at least one of airspeed, angle of attack, or turning information of the aircraft in real-time; and extracting the range-resolved data from the per-pulse data regarding the backscattered light based on a location of the aircraft determined based on at least one of the airspeed, the angle of attack, or the turning information of the aircraft.

Example 10 includes the method of any of Examples 1-9, further comprising: determining maximum power output for the plurality of pulses of light at a given operation condition; and collecting the per-pulse data using the maximum power output from the plurality of pulses of light determined at the given operation condition.

Example 11 includes a system positioned onboard an aircraft, the system comprising: at least one laser source configured to generate a plurality of pulses of light; at least one line of sight configured to define an optical path to emit the plurality of pulses of light toward a detection region; at least one receiving optics configured to receive backscattered light from the plurality of pulses of light from the detection region; at least one detector configured to receive the backscattered light from the detection region from the at least one receiving optics; and processing circuitry configured to: determine a reporting frequency and a spatial resolution required for the aircraft; collect per-pulse data regarding the backscattered light from the plurality of pulses of light from the detection region; extract range-resolved data from the per-pulse data regarding the backscattered light; calculate at least one of a distance traveled or a shift in a spatial grid in a common spatial reference frame based on a location of the aircraft and a time difference between emissions of the plurality of pulses of light; realign each pulse measurement result to a bin of a plurality of bins in the spatial grid based on the at least one of the distance traveled or the shift in the spatial grid; map the range-resolved data to the plurality of bins of the spatial grid; and apply a weighted average to the range-resolved data using weights based on a measurement uncertainty to determine a combined measurement for each bin of the plurality of bins in the spatial grid, the combined measurement based on measured results from the backscattered light from the plurality of pulses of light from the detection region.

Example 12 includes the system of Example 11, further comprising: wherein the processing circuitry is configured to: realign each pulse measurement result by adjusting the time difference between the emissions of the plurality of pulses of light based on the distance traveled by the aircraft between pulses.

Example 13 includes the system of any of Examples 11-12, further comprising: wherein the processing circuitry is configured to: realign each pulse measurement result by fractional re-binning when bins from the plurality of pulses partially overlap.

Example 14 includes the system of any of Examples 11-13, further comprising: wherein the processing circuitry is configured to: realign each pulse measurement result by adjusting at least one detection time window for a bin in the spatial grid to compensate for the shift in the spatial grid.

Example 15 includes the system of any of Examples 11-14, further comprising: wherein the processing circuitry is configured to: realign each pulse measurement result through at least one of a Kalman filter or a Bayesian filter.

Example 16 includes the system of any of Examples 11-15, further comprising: wherein the processing circuitry is configured to: apply the weighted average to the range-resolved data to determine the combined measurement for each bin in the spatial grid at least in part by: combining the measured results from different pulses into a single bin on the spatial grid using a summation.

Example 17 includes the system of any of Examples 11-16, further comprising: wherein the processing circuitry is configured to: collect the per-pulse data regarding the backscattered light from the plurality of pulses of light from the detection region for a given altitude.

Example 18 includes the system of any of Examples 11-17, further comprising: wherein the processing circuitry is configured to: collect at least one of an airspeed, an angle of attack, or turning information of the aircraft in real-time; and extract the range-resolved data from the per-pulse data regarding the backscattered light based on a location of the aircraft determined based on the at least one of the airspeed, the angle of attack, or the turning information of the aircraft.

Example 19 includes the system of any of Examples 11-18, further comprising: wherein the processing circuitry is configured to: determine maximum power output for the at least one laser source at a given operation condition; and collect the per-pulse data using the maximum power output from the at least one laser source determined at the given operation condition.

Example 20 includes a method comprising: determining a reporting frequency and spatial resolution needed for an aircraft; determining maximum power output from at least one laser source at a given operation condition; selecting a pulse repetition rate for the at least one laser source independently of the reporting frequency; emitting, from the at least one laser source, a plurality of pulses of light at the maximum power output toward a detection region; receiving, by a detector, backscattered light from the plurality of pulses of light from the detection region; collecting an airspeed and an angle of attack of the aircraft in real-time; collecting turning information of the aircraft based on a projected fly direction in real-time; collecting per-pulse data regarding the backscattered light from the plurality of pulses of light at the maximum power output from the detection region at the given operation condition; extracting range-resolved data from the per-pulse data regarding the backscattered light based on a location of the aircraft determined based on at least one of the airspeed, the angle of attack, and the turning information for the aircraft; calculating at least one of a distance traveled or a shift in a spatial grid in a common spatial reference frame based on the location of the aircraft and a time difference between emissions of the plurality of pulses of light; realigning each pulse measurement result to a bin of a plurality of bins in the spatial grid based on the at least one of the distance traveled or the shift in the spatial grid; mapping the range-resolved data to the plurality of bins of the spatial grid; applying a weighted average to the range-resolved data using weights based on measurement uncertainty to determine a combined measurement for each bin of the plurality of bins in the spatial grid, the combined measurement based on measured results from the backscattered light from the plurality of pulses of light from the detection region; and reporting the combined measurement for each bin of the plurality of bins within the spatial grid.

## Claims

1. A method for measuring airflow ahead of an aircraft for gust load alleviation, the method comprising:
determining a reporting frequency and a spatial resolution required for an aircraft;
collecting per-pulse data regarding backscattered light from a plurality of pulses of light from a detection region;
extracting range-resolved data from the per-pulse data regarding the backscattered light;
calculating at least one of a distance traveled by the aircraft or a shift of a spatial grid in a common spatial reference frame based on a location of the aircraft and a time difference between emissions of the plurality of pulses of light;
realigning each pulse measurement result to a bin of a plurality of bins in the spatial grid based on the at least one of the distance traveled by the aircraft or the shift of the spatial grid;
mapping the range-resolved data to the plurality of bins of the spatial grid; and
applying a weighted average to the range-resolved data using weights based on measurement uncertainty to determine a combined measurement for each bin of the plurality of bins in the spatial grid, the combined measurement based on measured results from the backscattered light from the plurality of pulses of light from the detection region.

2. The method of claim 1, further comprising:
emitting, from at least one laser source, the plurality of pulses of light toward the detection region; and
receiving, by a detector, the backscattered light from the plurality of pulses of light from the detection region.

3. The method of claim 2, further comprising:
realigning each pulse measurement result by adjusting the time difference between the emissions of the plurality of pulses of light based on the distance traveled by the aircraft between pulses.

4. The method of claim 1, further comprising:
realigning each pulse measurement result by fractional re-binning when bins from the plurality of pulses partially overlap.

5. The method of claim 1, further comprising:
realigning each pulse measurement result by adjusting at least one detection time window for a bin in the spatial grid to compensate for the shift in the spatial grid.

6. The method of claim 1, further comprising:
realigning each pulse measurement result through at least one of a Kalman filter or a Bayesian filter.

7. The method of claim 1, further comprising:
wherein applying the weighted average to the range-resolved data to determine the combined measurement for each bin in the spatial grid comprises: combining the measured results from different pulses into a single bin on the spatial grid using a summation.

8. The method of claim 1, further comprising:
wherein collecting the per-pulse data regarding the backscattered light from the plurality of pulses of light from the detection region is for a given altitude.

9. The method of claim 1, further comprising:
collecting at least one of airspeed, angle of attack, or turning information of the aircraft in real-time; and
extracting the range-resolved data from the per-pulse data regarding the backscattered light based on a location of the aircraft determined based on at least one of the airspeed, the angle of attack, or the turning information of the aircraft.

10. The method of claim 1, further comprising:
determining maximum power output for the plurality of pulses of light at a given operation condition; and
collecting the per-pulse data using the maximum power output from the plurality of pulses of light determined at the given operation condition.

11. A system positioned onboard an aircraft, the system comprising:
at least one laser source configured to generate a plurality of pulses of light;
at least one line of sight configured to define an optical path to emit the plurality of pulses of light toward a detection region;
at least one receiving optics configured to receive backscattered light from the plurality of pulses of light from the detection region;
at least one detector configured to receive the backscattered light from the detection region from the at least one receiving optics; and
processing circuitry configured to:
determine a reporting frequency and a spatial resolution required for the aircraft;
collect per-pulse data regarding the backscattered light from the plurality of pulses of light from the detection region;
extract range-resolved data from the per-pulse data regarding the backscattered light;
calculate at least one of a distance traveled or a shift in a spatial grid in a common spatial reference frame based on a location of the aircraft and a time difference between emissions of the plurality of pulses of light;
realign each pulse measurement result to a bin of a plurality of bins in the spatial grid based on the at least one of the distance traveled or the shift in the spatial grid;
map the range-resolved data to the plurality of bins of the spatial grid; and
apply a weighted average to the range-resolved data using weights based on a measurement uncertainty to determine a combined measurement for each bin of the plurality of bins in the spatial grid, the combined measurement based on measured results from the backscattered light from the plurality of pulses of light from the detection region.

12. The system of claim 11, further comprising:
wherein the processing circuitry is configured to at least one of:
realign each pulse measurement result by adjusting the time difference between the emissions of the plurality of pulses of light based on the distance traveled by the aircraft between pulses;
realign each pulse measurement result by fractional re-binning when bins from the plurality of pulses partially overlap;
realign each pulse measurement result by adjusting at least one detection time window for a bin in the spatial grid to compensate for the shift in the spatial grid; and
realign each pulse measurement result through at least one of a Kalman filter or a Bayesian filter.

13. The system of claim 11, further comprising:
wherein the processing circuitry is configured to:
apply the weighted average to the range-resolved data to determine the combined measurement for each bin in the spatial grid at least in part by: combining the measured results from different pulses into a single bin on the spatial grid using a summation.

14. The system of claim 11, further comprising:
wherein the processing circuitry is configured to:
collect at least one of an airspeed, an angle of attack, or turning information of the aircraft in real-time; and
extract the range-resolved data from the per-pulse data regarding the backscattered light based on a location of the aircraft determined based on the at least one of the airspeed, the angle of attack, or the turning information of the aircraft.

15. The system of claim 11, further comprising:
wherein the processing circuitry is configured to:
determine maximum power output for the at least one laser source at a given operation condition; and
collect the per-pulse data using the maximum power output from the at least one laser source determined at the given operation condition.
